# EUROPÄISCHE PATENTSCHRIFT

(11) **EP 2 125 425 B1**
(45) Veröffentlichungstag und Bekanntmachung des Hinweises auf die Patenterteilung: **13.04.2016**
(21) Anmeldenummer: 08707677.4
(22) Anmeldetag: 12.02.2008
(51) Int. Cl.: B60N 2/22

(54) **FAHRZEUGSITZ UND MONTAGEVERFAHREN**
VEHICLE SEAT AND ASSEMBLY METHOD
SIÈGE DE VÉHICULE ET PROCÉDÉ DE MONTAGE

(30) Priorität: 19.02.2007 DE 102007008453; 06.09.2007 DE 102007042285
(43) Veröffentlichungstag der Anmeldung: 02.12.2009
(73) Patentinhaber: Johnson Controls GmbH, 51399 Burscheid (DE)
(72) Erfinder: LABUWY, Cornel, 42857 Remscheid (DE); MOOG, Michael, 42697 Solingen (DE); MÜHLENBROCK, Ludger, 45665 Recklinghausen (DE); ZYNDA, Martin, 51399 Burscheid (DE); HAKE, Ernst-Jürgen, 42477 Radevormwald (DE); SPRENGER, Erik, 42929 Wernelskirchen (DE)
(74) Vertreter: Wolff, Felix
(86) Internationale Anmeldenummer: PCT/EP2008/001056
(87) Internationale Veröffentlichungsnummer: WO 2008/101618

(56) Entgegenhaltungen:
- EP-A- 1 193 119
- EP-A- 1 749 692
- DE-A1- 19 942 976
- FR-A- 2 842 476

## Beschreibung

Die Erfindung betrifft einen Fahrzeugsitz mit einer Rückenlehne gemäß dem Oberbegriff des Patentanspruchs 1.

Derartige Fahrzeugsitze sind aus dem Stand der Technik beispielsweise der US 5,064,246, der DE 100 47 770, der DE 199 42 976 A1, der FR 2 842 476 A, der EP 1 193 119 A sowie der DE 44 23 912 bekannt. Bei diesen Fahrzeugsitzen ist die Rückenlehne mittels eines Lehnenverstellers mit einem Sitzteil verbunden, wobei der Lehnenversteller ein Teil aufweist, das mit der Rückenlehne oder mit dem Sitzteil verbunden ist. Bei der Montage der Rückenlehne und des Sitzteils eines Fahrzeugsitzes sind diese in einer Monatageposition zu halten, welche das Anbringen von Befestigungsmitteln, beispielsweise Schrauben oder Schweißpunkten, ermöglicht. Ferner sind die Befestigungsmittel zu platzieren und mittels eines Werkzeugs manuell zu fixieren. Es sind somit mindestens drei Gegenstände , Rückenlehne, Befestigungsmittel sowie Werkzeug, gleichzeitig in Position zu halten, so dass die Montage praktisch nicht von einer Person durchgeführt werden kann.

Das Dokument EP1749692 offenbart einen gattungsgemässen Fahrzeugsitz und ein Verfahren zur Montage eines solchen Fahrzeugsitzes.

Es war deshalb die Aufgabe der vorliegenden Erfindung einen Fahrzeugsitz und ein Verfahren zur Verfügung zu stellen, mit dem Fahrzeugsitze einfach und kostengünstig montierbar sind.

Gelöst wird die Aufgabe mit einem Fahrzeugsitz gemäß Patentanspruch 1 und mit einem Verfahren gemäß Patentanspruch 7.

Der erfindungsgemäße Fahrzeugsitz bzw. das erfindungsgemäße Verfahren haben den Vorteil, dass das Positionieren der Rückenlehne gegenüber dem Sitzteil von dem Anbringen der Befestigungsmittel entkoppelt wird. Dafür sind erste Mittel und ein zweites Mittel vorgesehen, mit denen sich beispielsweise der Lehnenversteller und damit die Rückenlehne provisorisch mit dem Sitzteil verbinden lassen. Sobald die provisorische Verbindung erfolgt ist, kann die eigentliche Verbindung zwischen dem Sitzteil mit dem Lehnenversteller mit entsprechenden Befestigungsmitteln erfolgen. In einer bevorzugten Ausführungsform ist eine Verbindung vorgesehen, mittels derer die Rückenlehne, zumindest näherungsweise der Schwerkraftrichtung folgend, bis zum Erreichen eines Endanschlags auf der Sitzteil aufstecken lässt, wobei die Rückenlehne in allen Richtungen mit Ausnahme der Schwerkraftrichtung entgegen gesetzten Richtung durch Formschluss in Position gehalten wird. Nachfolgend kann das Anbringen der Befestigungsmittel (Schrauben, Nieten oder dergleichen) oder auch ein Verschweißen erfolgen. Die Verbindung ist bevorzugt zwischen dem sitzteilseitigen Beschlagteil der Lehnenneigungsversteller und der Struktur des Sitzteils ausgebildet, wobei die Lehnenneigungsversteller vorab an der Struktur der Rückenlehne befestigt werden. Grundsätzlich kann natürlich auch das Sitzteil mit vormontierten Lehnenneigungsversteller auf die Rückenlehne ausgesteckt werden.

Bei dem Fahrzeugsitz kann es sich um einen beliebigen Sitz innerhalb eines Fahrzeuges handeln. Dieser Fahrzeugsitz kann einer oder mehreren Personen Platz bieten, so dass es sich bei dem Fahrzeugsitz auch um eine Sitzbank handeln kann. Dieser Fahrzeugsitz weist vorzugsweise an seiner rechten und linken Seite jeweils einen Lehnenversteller auf, die die Rückenlehne mit dem Sitzteil verbindet und eine Neigungsverstellung der Rückenlehne relativ zu dem Sitzteil erlaubt. Der Lehnenversteller weist wiederum mindestens ein Teil auf, das mit der Rückenlehne verbunden ist. Vorzugsweise weist der Lehnenversteller jedoch jeweils zwei Teile auf, wobei ein Teil mit der Rückenlehne und das andere Teil mit dem Sitzteil verbunden wird.

Erfindungsgemäß ist in dieses Teil und die Tragstruktur des Sitzteils mindestens ein erstes Mittel eingeformt, eingearbeitet, ausgeformt oder daran angeordnet, das die Lage des Teils relativ zu dem Sitzteil in mindestens einer Richtung vorzugsweise provisorisch festlegt. Eingeformt im Sinne der Erfindung bedeutet, dass das erste Mittel durch Umformen in das Teil und die Tragstruktur des Sitzteils eingearbeitet ist. Vorzugsweise handelt es sich bei dem ersten Mittel um eine Einbuchtung oder Auswölbung. Angeordnet im Sinne der Erfindung bedeutet, dass das erste Mittel an dem Teil und der Tragstruktur des Sitzteils durch Form-, Kraft- und/oder Stoffschluss angebracht wird. Bei dem ersten Mittel kann es aber auch um eine Ausnehmung, beispielsweise eine Bohrung handeln. Besonders bevorzugt weisen sowohl das Teil als auch die Tragstruktur der Rückenlehne und/oder die Tragstruktur des Sitzteils mindestens eins dieser ersten Mittel auf. Besonders bevorzugt sind die ersten Mittel komplementär zueinander in ihrer Form gestaltet und jeweils so angeordnet, dass das Teil relativ zu der Tragstruktur des Sitzteils die gewünschte Position einnimmt in der sie dann anschließend mit den Befestigungsmitteln fixiert wird. Vorzugsweise ist das Mittel ein Formschlussmittel, so dass der damit erzeugte Verbund noch mindestens einen Freiheitsgrad aufweist.

Erfindungsgemäß weist die Tragstruktur des Sitzteils ein zweites Mittel auf. Durch dieses zweite Mittel wird insbesondere erreicht, dass der Verbund allenfalls noch einen Freiheitsgrad entgegen der Schwerkraft besitzt.

Erfindungsgemäß handelt es sich insbesondere bei dem zweiten Mittel um einen Anschlag.

Vorzugsweise wird das Teil an dem Sitzteil vorgespannt angeordnet. Dadurch wird sichergestellt, dass sich der Verbund zwischen dem Teil und dem Sitzteil nicht selbsttätig löst. Diese Vorspannung wird beispielsweise dadurch erzielt, dass die Teile des rechten und linken Lehnenverstellers bei der Montage auseinander gebogen werden.

Besonders bevorzugt ist das erste Mittel Teil einer Schnappverbindung, wobei der Schnappeffekt vorzugsweise durch die oben genannte Vorspannung erzielt wird.

Nachdem das Teil provisorisch an dem Sitzteil angebracht worden ist, wird es anschließend mit kraft- und/oder stoffschlüssigen Befestigungsmitteln mit dem Sitzteil verbunden. Kraft- und/oder stoffschlüssige Befestigungsmittel sind beispielsweise Schrauben, Nieten, Schweiß- oder Klebeverbindungen.

Ein weiterer Gegenstand der vorliegenden Erfindung ist ein Verfahren zur Montage eines Kraftfahrzeugsitzes, bei dem eine Rückenlehne mittels zwei Lehnenverstellern mit einem Sitzteil verbunden wird, wobei jeder Lehnenversteller ein Teil aufweist, das mit dem Sitzteil verbunden wird, bei dem die Teile vorgespannt werden und erste Mittel, die in das Teil und/das Sitzteil eingeformt, ausgeformt, eingearbeitet oder daran angeordnet werden, ineinander einrasten.

Alle zu dem erfindungsgemäßen Fahrzeugsitz gemachten Ausführungen gelten für das erfindungsgemäße Verfahren gleichermaßen.

Erfindungsgemäß wird das Teil um das eingerastete erste Mittel gedreht, bis es an einem Anschlag anliegt.

Vorzugsweise wird das Teil anschließend kraft- und/oder formschlüssig mit dem Sitzteil verbunden.

Die Figuren stellen beispielhaft und schematisch eine Ausführung der Erfindung dar. Dies Darstellungen sind lediglich beispielhaft und schränken den allgemeinen Erfindungsgedanken nicht ein.
- Figur en 1a - 1c: zeigen den erfindungsgemäßen Kraftfahrzeugsitz
- Figur 2: zeigt die Aufnahme des Sitzseitenteils
- Figur 3: zeigt das Teil des Lehnenneigungsverstellers, das mit der Aufnahme gemäß Figur 2 zusammenwirkt.
- Figuren 4a - 4b: zeigen Details der Seitenteile des Sitzteils

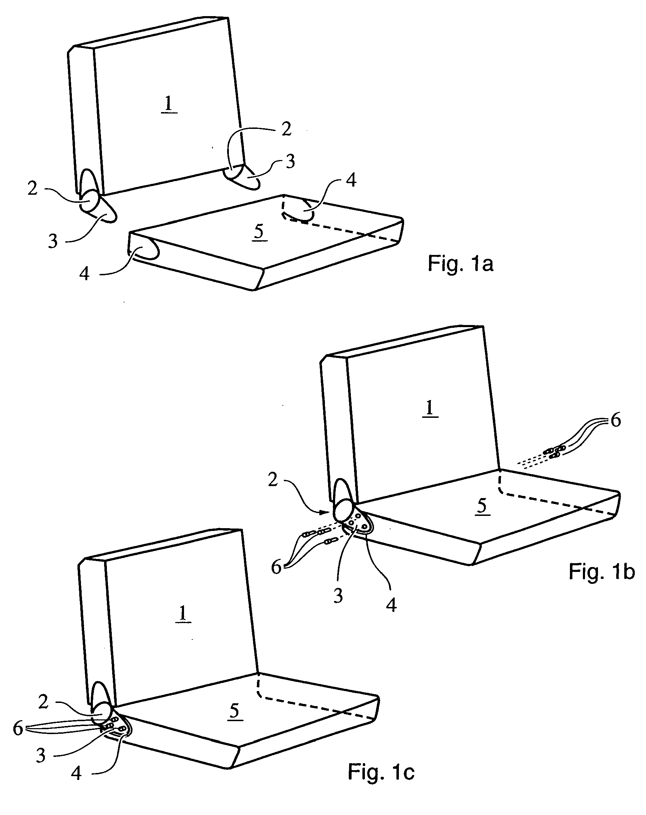

Figur 1 a zeigt die Rückenlehne 1 mit zwei daran befestigten Lehnenneigungsverstellern 2, deren sitzteilseitigen Beschlagteile 3 passend zu Aufnahmen 4 im Sitzteil 5 ausgebildet sind. Nach dem Einstecken oder Aufstecken der Beschlagteile 3 in und/oder auf die Aufnahmen 4 bleibt die Rückenlehne 1 in einer aufrechten Position stehen (Figur 1 b), ohne dass der Werker sie festhält. Die Befestigungsmittel 6, in diesem Fall Schrauben, können nun mittels eines nicht dargestellten Werkzeugs nacheinander händisch durch die Beschlagteile 3 in das Sitzteil 5 eingebracht werden und sichern die Rückenlehne 1 am Sitzteil 5 dauerhaft (Figur 1c). Vorteilhafterweise werden die Beschlagteile 3 bei der Montage elastisch auseinandergedrückt und bleiben auch, nachdem sie mit der Aufnahme in Kontakt stehen, vorzugsweise vorgespannt, um zu vermeiden, dass sich die provisorische Verbindung zwischen dem Beschlagteil 3 und der Aufnahme 4 selbsttätig löst.

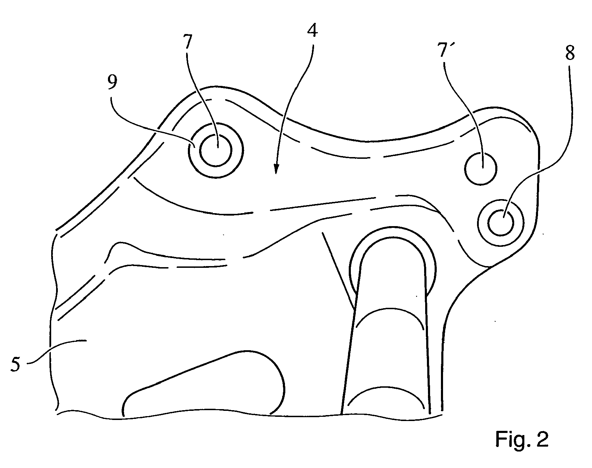

In Figur 2 ist die Aufnahme 4 des Sitzteils 5 im Detail dargestellt, welche zwei Bohrungen 7, 7' für die Durchführung der Befestigungsmittel und einen hinteren, geprägten Endanschlag 8 aufweist. Die vordere Bohrung 7 ist mit einer topfartigen konzentrischen Absenkung 9 versehen, die ebenfalls durch Umformen hergestellt wurde.

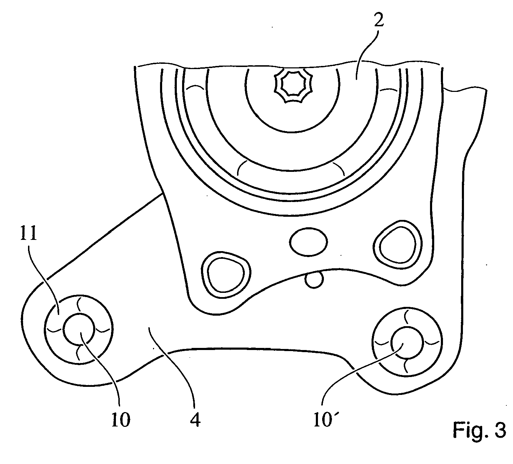

Das in Fig. 3 gezeigte Beschlagteil 3 des Lehnenneigungsverstellers 2 weist Bohrungen 10, 10 auf, die abstandsgleich zu den Bohrungen 7, 7' in Figur 2 aufgeführt sind. Die mit der Bohrung 7 deckende Bohrung 10 weist eine zylindrische eingeformte Vorwölbung 11 auf, welche in die Absenkung 9 hineinpasst; d.h. zu dieser komplementär ist. Beim Aufsetzen der Rückenlehne 1 werden die Beschlagteile 4 der einander gegenüberliegend angeordneten und spiegelbildlich ausgeführten Lehnenneigungsversteller 2 elastisch auseinander gespreizt, bis die Vorwölbungen 11 beider Lehnenneigungsversteller 2 in die zugeordneten Absenkungen 9 beiderseits des Sitzteils 5 einschnappen. Die Beschlagsteile 3 bleiben vorzugsweise auch nach dem Einschnappen zumindest etwas vorgespannt. Dadurch entsteht eine Formschlussverbindung mit noch einem Freiheitsgrad. Die Rückenlehne 1 wird nun der Schwerkraft folgend nach hinten verschwenkt, bis die Beschlagteile 4 auf den Endanschlägen 8 beiderseits des Sitzteils 5 anliegen. Die Rückenlehne 1 verbleibt nun in dieser Montagestellung, bis die Befestigungsmittel 6, hier Schrauben, durch die Bohrungen 7, 10 bzw. 7', 10' geführt und angezogen sind.

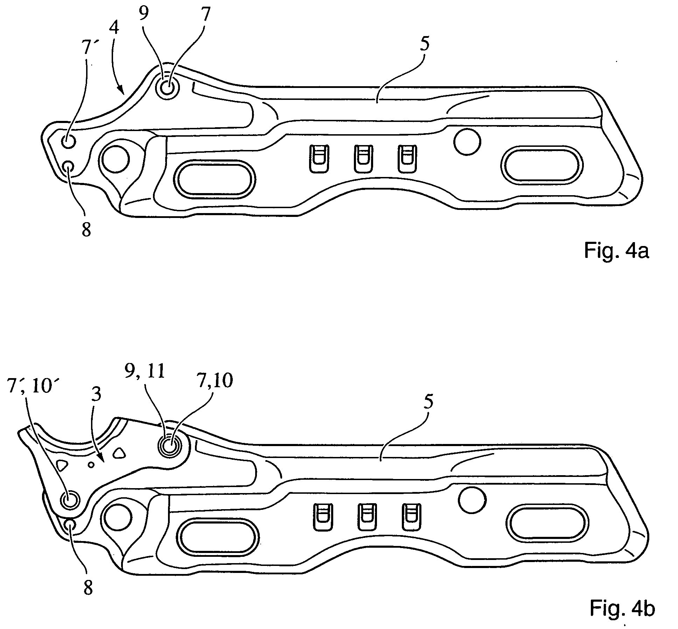

Fig. 4a stellt die Struktur der Seitenteile des Sitzteils 5 in seitlicher Ansicht dar. Bei der Darstellung nach Fig. 4b befindet sich das Beschlagteil 3 bereits in Montagestellung.

### Bezugszeichenliste:

- 1: Rückenlehne
- 2: Lehnenneigungsversteller
- 3: Beschlagteil
- 4: Aufnahme
- 5: Sitzteil
- 8: Befestigungsmittel
- 7, 7: Bohrung
- 8: Endanschlag
- 9: Absenkung
- 10, 10': Bohrung
- 11: Vorwölbung

## Patentansprüche

1. Fahrzeugsitz mit einer Rückenlehne (1), die mittels eines Lehnenverstellers (2) mit einem Sitzteil (5) verbunden ist, wobei der Lehnenversteller (2) ein Teil (3) aufweist, das mit der Rückenlehne (1) verbunden ist, **dadurch gekennzeichnet, dass** in das Teil (3) und in das Sitzteil (5) erste Mittel (9, 11), und in das Sitzteil (5) ein zweites Mittel (8) eingeformt, eingearbeitet, ausgeformt und/oder daran angeordnet sind, die die Lage des Teils (3) relativ zu dem Sitzteil (5) in mindestens einer Richtung vorzugsweise provisorisch festlegen, wobei das Teil (3) um die ersten Mittel (9, 11) drehbar angeordnet ist und das zweite Mittel (8) ein Anschlag ist, an dem das Teil (3) anliegt.

2. Fahrzeugsitz nach Anspruch 1, **dadurch gekennzeichnet, dass** die ersten Mittel (9, 11) Formschlussmittel sind.

3. Fahrzeugsitz nach einem der voranstehenden Ansprüche, **dadurch gekennzeichnet, dass** die ersten Mittel (9, 11) eine Senke bzw. eine Auswölbung sind.

4. Fahrzeugsitz nach einem der voranstehenden Ansprüche, **dadurch gekennzeichnet, dass** das Teil (3) an dem Sitzteil (5) vorgespannt angeordnet ist.

5. Fahrzeugsitz nach einem der voranstehenden Ansprüche, **dadurch gekennzeichnet, dass** die ersten Mittel (9, 11) Teil einer Schnappverbindung sind.

6. Fahrzeugsitz nach einem der voranstehenden Ansprüche, **dadurch gekennzeichnet, dass** das Teil (3) anschließend mit kraft- oder stoffschlüssigen Befestigungsmitteln (6) mit dem Sitzteil (5) verbunden ist.

7. Verfahren zur Montage eines Kraftfahrzeugsitzes, bei dem eine Rückenlehne (1) mittels zwei Lehnenverstellern (2) mit einem Sitzteil (5) verbunden wird, wobei jeder Lehnenversteller (2) ein Teil (3) aufweist, das mit dem Sitzteil (5) verbunden wird und die Teile (3) vorgespannt werden und erste Mittel (9, 11), die an dem Teil (3), und dem Sitzteil (5) angeordnet und/oder eingeformt werden, ineinander einrasten, **dadurch gekennzeichnet, dass** das Teil (3) um r die eingerasteten ersten Mittel (9, 11) gedreht wird, bis es an einem Anschlag (8) anliegt.

8. Verfahren nach Anspruch 7, **dadurch gekennzeichnet, dass** das Teil (3) anschließend kraft- und/oder formschlüssig mit der Rückenlehne (1) und/oder dem Sitzteil (5) verbunden wird.

## Claims

1. Vehicle seat comprising a backrest (1), which is connected to a sitting part (5) by means of a backrest adjusting element (2), the backrest adjusting element (2) having a part (3) that is connected to the backrest (1), **characterized in that** first means (9, 11) are formed, incorporated, shaped and/or arranged in the part (3) and in the sitting part (5) and a second means (8) is formed, incorporated, shaped and/or arranged in the sitting part (5), which means preferably temporarily secure the position of the part (3) relative to the sitting part (5) in at least one direction, wherein the part (3) is rotatably arranged about the first means (9, 11) and the second means (8) is a stop against which the part (3) bears.

2. Vehicle seat according to Claim 1, **characterized in that** the first means (9, 11) are positive connection means.

3. Vehicle seat according to one of the preceding claims, **characterized in that** the first means (9, 11) are a depression or a bulged portion.

4. Vehicle seat according to one of the preceding claims, **characterized in that** the part (3) is arranged in a pretensioned manner on the sitting part (5).

5. Vehicle seat according to one of the preceding claims, **characterized in that** the first means (9, 11) are part of a snap connection.

6. Vehicle seat according to one of the preceding claims, **characterized in that** the part (3) is subsequently connected to the sitting part (5) by fastening means (6) using a non-positive or material connection.

7. Method for assembling a motor vehicle seat in which a backrest (1) is connected to a sitting part (5) by means of two backrest adjusting elements (2), each backrest adjusting element (2) having a part (3) that is connected to the sitting part (5) and the parts (3) being pretensioned and first means (9, 11), which are arranged and/or formed on the part (3) and the sitting part (5), engaging with one another, **characterized in that** the part (3) is rotated around the engaged first means (9, 11) until it bears against a stop (8).

8. Method according to Claim 7, **characterized in that** the part (3) is subsequently non-positively and/or positively connected to the backrest (1) and/or the sitting part (5).

## Revendications

1. Siège de véhicule comprenant un dossier (1) qui est connecté à une partie de siège (5) au moyen d'un dispositif de réglage de dossier (2), le dispositif de réglage de dossier (2) présentant une partie (3) qui est connectée au dossier (1), **caractérisé en ce que** des premiers moyens (9, 11) sont formés en retrait, incorporés, formés en saillie et/ou disposés dans/sur la partie (3) et la partie de siège (5) et un deuxième moyen (8) est formé en retrait, incorporé, formé en saillie et/ou disposé dans/sur la partie de siège (5), lesquels fixent la position de la partie (3) par rapport à la partie de siège (5) dans au moins une direction, de préférence de manière provisoire, la partie (3) étant disposée de manière à pouvoir tourner autour des premiers moyens (9, 11) et le deuxième moyen (8) étant une butée contre laquelle s'applique la partie (3).

2. Siège de véhicule selon la revendication 1, **caractérisé en ce que** les premiers moyens (9, 11) sont des moyens d'engagement par correspondance de formes.

3. Siège de véhicule selon l'une quelconque des revendications précédentes, **caractérisé en ce que** les premiers moyens (9, 11) sont un renfoncement ou un bombement.

4. Siège de véhicule selon l'une quelconque des revendications précédentes, **caractérisé en ce que** la partie (3) est disposée de manière précontrainte contre la partie de siège (5).

5. Siège de véhicule selon l'une quelconque des revendications précédentes, **caractérisé en ce que** les premiers moyens (9, 11) font partie d'une connexion par encliquetage.

6. Siège de véhicule selon l'une quelconque des revendications précédentes, **caractérisé en ce que** la partie (3) est ensuite connectée à la partie de siège (5) par des moyens de fixation (6) par engagement par force ou par liaison de matière.

7. Procédé de montage d'un siège de véhicule automobile dans lequel un dossier (1) est connecté au moyen de deux dispositifs de réglage de dossier (2) à une partie de siège (5), chaque dispositif de réglage de dossier (2) présentant une partie (3) qui est connectée à la partie de siège (5) et les parties (3) étant précontraintes et des premiers moyens (9, 11) qui sont disposés et/ou formés en retrait au niveau de la partie (3) et de la partie de siège (5), s'encliquètent les uns dans les autres, **caractérisé en ce que** la partie (3) est tournée autour des premiers moyens encliquetés (9, 11) jusqu'à ce qu'elle s'applique contre une butée (8).

8. Procédé selon la revendication 7, **caractérisé en ce que** la partie (3) est ensuite connectée par engagement par force et/ou par correspondance de formes au dossier (1) et/ou à la partie de siège (5).
